# EUROPEAN PATENT SPECIFICATION

(11) **EP 3 218 754 B1**
(45) Date of publication and mention of the grant of the patent: **27.10.2021**
(21) Application number: 15797450.2
(22) Date of filing: 09.11.2015
(51) Int. Cl.: G02B 6/38

(54) **SYSTEM AND METHOD OF AUTOMATICALLY INSERTING FIBER**
SYSTEM UND VERFAHREN ZUR AUTOMATISCHEN EINFÜHRUNG VON FASERN
SYSTÈME ET PROCÉDÉ D'INSERTION AUTOMATIQUE DE FIBRES

(30) Priority: 10.11.2014 CN 201410627777
(43) Date of publication of application: 20.09.2017
(73) Proprietor: Tyco Electronics (Shanghai) Co. Ltd., Shanghai 200131 (CN); TE Connectivity Corporation, Berwyn, PA 19312 (US)
(72) Inventor: XIE, Fengchun, Pilot Free Trade Zone Shanghai (CN); ZHANG, Dandan, Pilot Free Trade Zone Shanghai (CN); HU, Lvhai, Pilot Free Trade Zone Shanghai (CN); LEE, Hang, Pilot Free Trade Zone Shanghai (CN); ZHANG, Yu, Pilot Free Trade Zone Shanghai (CN); LU, Roberto Francisco-Yi, Berwyn, PA 19312 (US)
(74) Representative: Grünecker Patent- und Rechtsanwälte PartG mbB
(86) International application number: PCT/IB2015/058634
(87) International publication number: WO 2016/075607

(56) References cited:
- EP-A1- 0 489 169
- CN-U- 203 658 624
- JP-A- H0 915 088
- JP-A- H07 333 466
- US-A- 6 034 718
- US-B2- 6 913 397

## Description

### CROSS-REFERENCE TO RELATED APPLICATION

This application claims the benefit of Chinese Patent Application No. 201410627777.0 filed on November 10, 2015 in the State Intellectual Property Office of China.

### BACKGROUND OF THE INVENTION

### Field of the Invention

Embodiments of the present invention relate to a system and a method of automatically inserting at least one row of fibers of a multi-fiber cable into at least one row of bores of a multi-bore ferrule.

### Description of the Related Art

In prior art, a system of automatically inserting a single fiber of a single-fiber cable into a single bore of a single-bore ferrule has been developed. However, so far, there is not developed a system adapted to automatically insert at least one row of fibers of a multi-fiber cable into at least one row of bores of a multi-bore ferrule.

Generally, the multi-bore ferrule is more complicated than the single-bore ferrule, and many new problems may be occurred during inserting the fibers of the multi-fiber cable into the bores of the multi-bore ferrule. Thereby, inserting at least one row of fibers of the multi-fiber cable into at least one row of bores of the multi-bore ferrule is more difficult than inserting the single fiber of the single-fiber cable into the single bore of the single-bore ferrule.

At present, at least one row of fibers of the multi-fiber cable are manually inserted into at least one row of bores of the multi-bore ferrule, it leads to very low production efficiency, and it is difficult to control the quality of inserting the fiber.

In European patent application EP 0 489 169 A1, a method of verifying the matching in terms of the positional relationship of the terminal portions of the optical fibers of a multi-fiber cable and the grooves of a ferrule is disclosed, so that the process of connecting a optical fiber cable and a ferrule may be fully automated.

In US 6 913 397 B2, a system and method of automatically inserting single rows of fibers of a multi-fiber cable into respective rows of bores of a multi-bore ferrule is disclosed.

A method and apparatus for observing before and after fusion splicing of optical fibers wherein the positional relationship of the opposing optical fibers is obtained by a vision device is disclosed in US 6 034 718 A.

JP H07 333466 A concerns a method and apparatus for inserting a multi-core optical fiber tape into a multi-core optical connection ferrule. When inserting the optical fiber tape into the multi-core optical connector ferrule, the angle of the multi-core optical connector is inclined with respect to the insertion direction of the optical fiber tape.

### SUMMARY OF THE INVENTION

The present invention has been made to overcome or alleviate at least one aspect of the above mentioned disadvantages.

According to an object of the present invention, there is provided a system and a method of automatically inserting at least one row of fibers of a multi-fiber cable into at least one row of bores of a multi-bore ferrule in high efficiency and quality.

The system is defined in independent claim 1, the method is defined in independent claim 9, further advantageous features are defined in the dependent claims.

In the various exemplary embodiments of the present invention, under the guidance of the vision device, the moving mechanism automatically aligns the center of the end surface profile of the at least one row of fibers with the center of the end surface profile of the multi-bore ferrule and automatically inserts the at least one row of fibers into the at least one row of bores of the multi-bore ferrule. Thereby, the at least one row of fibers is quickly and accurately inserted into the multi-bore ferrule, improving the fiber insertion efficiency and quality.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative view of a typical ribbon multi-fiber cable;
Fig.2a is an illustrative perspective view of a typical multi-bore ferrule viewing from its rear side;
Fig.2b is an illustrative perspective view of the typical multi-bore ferrule viewing from its front side;
Fig.3 is an illustrative view of a system of automatically inserting fibers according to an exemplary embodiment of the present invention;
Fig.4 is an enlarged local view of the system shown in Fig.3;
Fig.5a shows a first image of the multi-fiber cable and the multi-bore ferrule captured by a first imaging apparatus; and
Fig.5b shows a second image of the multi-fiber cable and the multi-bore ferrule captured by a second imaging apparatus.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a system of automatically inserting at least one row of fibers of a multi-fiber cable into at least one row of bores of a multi-bore ferrule, the system comprising: a vision device configured to identify a center of an end surface profile of the at least one row of fibers and a center of an end surface profile of the multi-bore ferrule; a cable holder configured to hold the multi-fiber cable thereon; a ferrule holder configured to hold the multi-bore ferrule thereon; and a moving mechanism configured to be movable in a first direction, a second direction and a third direction that are perpendicular to each other, wherein the cable holder is mounted on the moving mechanism, and the moving mechanism moves the cable holder under the guidance of the vision device, so as to align the center of the end surface profile of the at least one row of fibers to the center of the end surface profile of the multi-bore ferrule and insert the at least one row of fibers into the at least one row of bores of the multi-bore ferrule, respectively and wherein the vision device comprises a first imaging apparatus positioned so that an optical axis of which is parallel to the third direction, so as to capture a first image of the at least one row of fibers and the multi-bore ferrule in the third direction; a second imaging apparatus positioned so that an optical axis of which is parallel to the first direction, so as to capture a second image of the at least one row of fibers and the multi-bore ferrule in the first direction; and an image recognition apparatus configured to identify a center line of the at least one row of fibers and a center line of the multi-bore ferrule in the first image and identify a center line of the at least one row of fibers and a center line of the multi-bore ferrule in the second image.

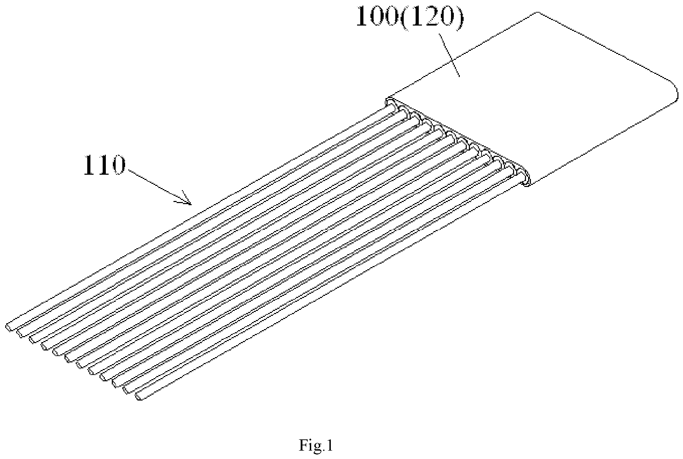

Fig. 1 is an illustrative view of a typical ribbon multi-fiber cable 100. As shown in Fig. 1, the multi-fiber cable 100 mainly comprises a plurality of fibers 110 and an outer protection layer 120 enclosing the fibers 110 therein.

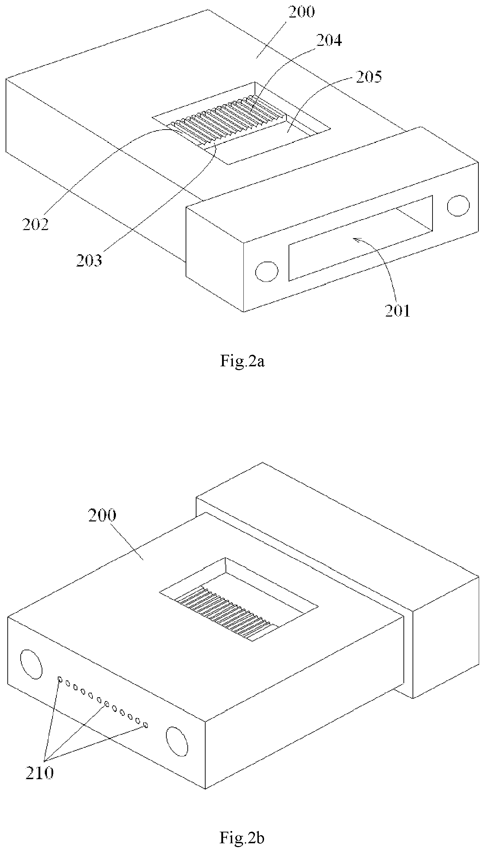

In the illustrated embodiment, as shown in Fig.1, the plurality of fibers 110 are arranged in one row. Before inserting the multi-fiber cable 100 into a multi-bore ferrule 200 (see Fig.2), it needs to strip off a section of outer protection layer 120 to expose the row of fibers 110 by a predetermined length.

Please be noted that the present invention is not limited to the illustrated embodiment, the fibers of the multi-fiber cable may be arranged in two or more rows. Correspondingly, the multi-bore ferrule may have two or more rows of bores.

Fig.2a is an illustrative perspective view of a typical multi-bore ferrule 200 viewing from its rear side; Fig.2b is an illustrative perspective view of the typical multi-bore ferrule 200 viewing from its front side.

As shown in Figs.2a and 2b, in an embodiment, a cable receiving chamber 201 is formed in a rear portion of the multi-bore ferrule 200. A platform 202 is formed on and protruded from a bottom surface of the cable receiving chamber 201. A row of guiding recesses 204, for guiding the row of fibers 110 of the multi-fiber cable 100 into the row of bores 210 of the multi-bore ferrule 200, are formed in a top surface of the platform 202. An opening 205, through which the platform 202 is exposed outside, is formed in a top wall of the cable receiving chamber 201.

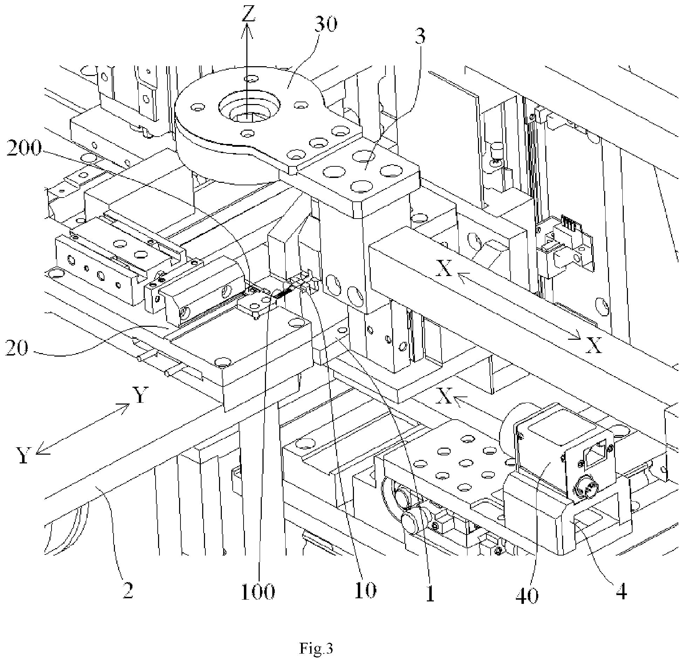

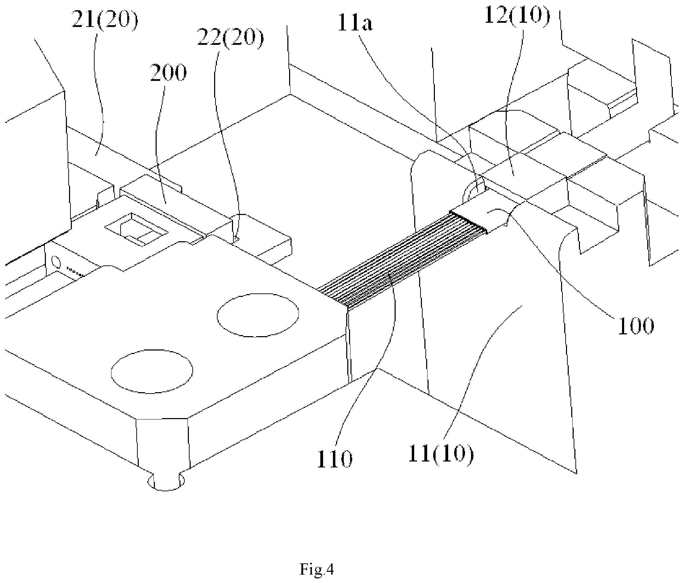

Fig.3 is an illustrative view of a system of automatically inserting fibers according to an exemplary embodiment of the present invention; Fig.4 is an enlarged local view of the system shown in Fig.3.

In the present invention, as shown in Figs.3 and 4, there is disclosed a system adapted to automatically inserting one row of fibers 110 of a multi-fiber cable 100 into one row of bores 210 of a multi-bore ferrule 200.

Referring to Figs.3 and 4, the system mainly comprises a vision device 30, 40 configured to identify a center of an end surface profile of the at least one row of fibers 110 and a center of an end surface profile of the multi-bore ferrule 200; a cable holder 10 configured to hold the multi-fiber cable 100 thereon; a ferrule holder 20 configured to hold the multi-bore ferrule 200 thereon; and a moving mechanism 1 configured to be movable in a first direction X, a second direction Y and a third direction Z that are perpendicular to each other.

As shown in Figs.3 and 4, the cable holder 10 is mounted on the moving mechanism 1. The moving mechanism 1 moves the cable holder 10 under the guidance of the vision device 30, 40, so as to align the center of the end surface profile of the row of fibers 110 with the center of the end surface profile of the multi-bore ferrule 200 and insert the row of fibers 110 into the row of bores 210 of the multi-bore ferrule 200 after aligning the center of the end surface profile of the row of fibers 110 with the center of the end surface profile of the multi-bore ferrule 200.

In an exemplary embodiment, as shown in Figs.3 and 4, the first direction X is defined as a left-right direction, the second direction Y is defined as a front-rear direction, and the third direction Z is defined as a vertical direction. The first direction X and the second direction Y define a horizontal plane perpendicular to the third direction Z.

In an exemplary embodiment, as shown in Figs.3 and 4, in order to easily insert the row of fibers 110 of the multi-fiber cable 100 into the row of bores 210 of the multi-bore ferrule 200, respectively, the cable holder 10 is configured to position the multi-fiber cable 100, so that a top surface and a bottom surface of the multi-fiber cable 100 are parallel to the horizontal plane defined by the first direction X and the second direction Y, that is, the row of fibers 110 of the multi-fiber cable 100 are parallel to the horizontal plane defined by the first direction X and the second direction Y. Furthermore, the ferrule holder 20 is configured to position the multi-bore ferrule 200, so that a top surface and a bottom surface of the multi-bore ferrule 200 is parallel to the horizontal plane defined by the first direction X and the second direction Y, that is, the row of bores 210 of the multi-bore ferrule 200 are parallel to the horizontal plane defined by the first direction X and the second direction Y.

In an exemplary embodiment, as shown in Figs.3 and 4, the ferrule holder 20 is fixed on a stationary working table 2 of the system. The ferrule holder 20 comprises a stationary block 21 mounted on the working table 2 of the system. A ferrule positioning slot 22, matched with the multi-bore ferrule 200, is formed in the stationary block 21. The multi-bore ferrule 200 may be fitted in the ferrule positioning slot 22.

In an exemplary embodiment, as shown in Figs.3 and 4, the cable holder 10 comprises a stationary seat 11 and a movable pressing plate 12. The stationary seat 11 may be mounted on an end portion of the moving mechanism 1. A cable positioning slot 11a is formed in the stationary seat 11. The multi-fiber cable 100 may be fitted in the cable positioning slot 11a. The movable pressing plate 12 is adapted to press the multi-fiber cable 100, so as to hold the multi-fiber cable 100 in a place. The movable pressing plate 12 is movable relative to the stationary seat 11, so as to press or release the multi-fiber cable 100. Please be noted that the cable holder is not limited to the cable holder 10 shown in Figs.3 and 4, the cable holder may be any other suitable clamp.

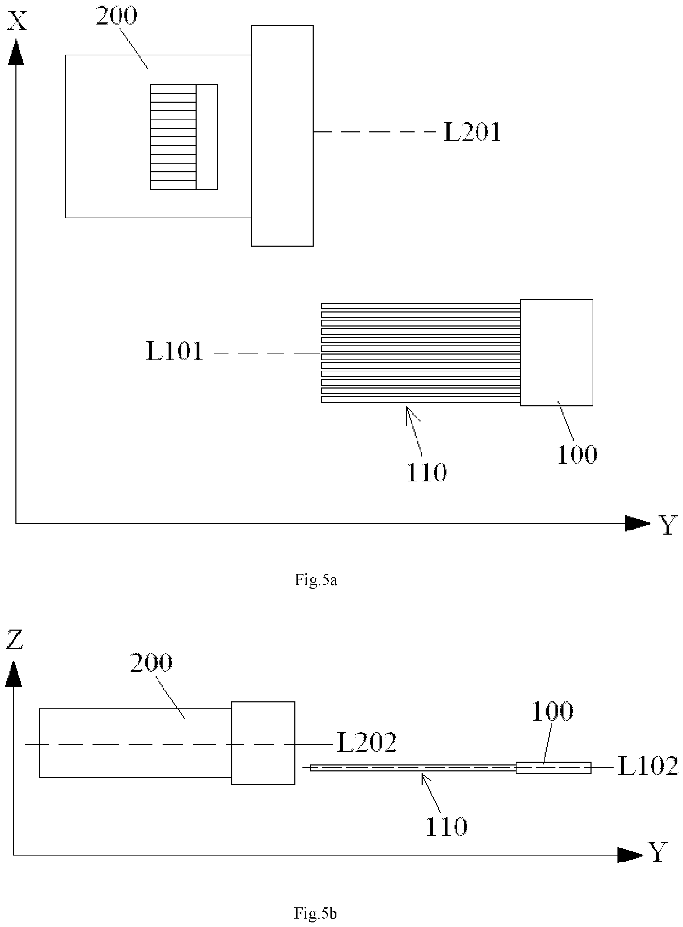

Fig.5a shows a first image of the multi-fiber cable 100 and the multi-bore ferrule 200 captured by a first imaging apparatus 30; and Fig.5b shows a second image of the multi-fiber cable 100 and the multi-bore ferrule 200 captured by a second imaging apparatus 40.

As shown in Figs.3, 4, 5a and 5b, the vision device 30, 40 mainly comprises a first imaging apparatus 30, a second imaging apparatus 40 and an image recognition apparatus.

As shown in Figs.3 and 5a, the first imaging apparatus 30 is positioned so that an optical axis thereof is parallel to the third direction Z, so as to capture a first image (see Fig.5a) of the row of fibers 110 and the multi-bore ferrule 200 in the third direction Z. The first imaging apparatus 30, for example, may be a camera. The first imaging apparatus 30 is fixed on a stationary support frame 3, and is not moved together with the moving mechanism 1.

As shown in Figs.3 and 5b, the second imaging apparatus 40 is positioned so that an optical axis thereof is parallel to the first direction X, so as to capture a second image (see Fig.5b) of the row of fibers 110 and the multi-bore ferrule 200 in the first direction X. The second imaging apparatus 40, for example, may be a camera. The second imaging apparatus 40 is fixed on a stationary support frame 4, and is not moved together with the moving mechanism 1.

As shown in Figs.5a and 5b, the image recognition apparatus is configured to identify a center line L101 of the row of fibers 110 and a center line L201 of the multi-bore ferrule 200 in the first image and identify a center line L102 of the row of fibers 110 and a center line L202 of the multi-bore ferrule 200 in the second image.

As shown in Fig.5a, in the first image, the center line L101 of the end surface profile of the row of fibers 110 and the center line L201 of the end surface profile of the multi-bore ferrule 200 are obtained. For example, as shown in Fig.5a, if the center line L101 of the end surface profile of the row of fibers 110 is not aligned with the center line L201 of the end surface profile of the multi-bore ferrule 200, the moving mechanism 1 may move the cable holder 10 in the first direction X until the center line L101 of the end surface profile of the row of fibers 110 is aligned with the center line L201 of the end surface profile of the multi-bore ferrule 200.

As shown in Fig.5b, in the second image, the center line L102 of the end surface profile of the row of fibers 110 and the center line L202 of the end surface profile of the multi-bore ferrule 200 are obtained. For example, as shown in Fig.5b, if the center line L102 of the end surface profile of the row of fibers 110 is not aligned with the center line L202 of the end surface profile of the multi-bore ferrule 200, the moving mechanism 1 may move the cable holder 10 in the third direction Z until the center line L102 of the end surface profile of the row of fibers 110 is aligned with the center line L202 of the end surface profile of the multi-bore ferrule 200.

After the center line L101 of the row of fibers 110 and the center line L201 of the multi-bore ferrule 200 in the first image are aligned with each other and after the center line L102 of the row of fibers 110 and the center line L202 of the multi-bore ferrule 200 in the second image are aligned with each other, the center of the end surface profile of the row of fibers 110 is aligned with the center of the end surface profile of the multi-bore ferrule 200 entirely. Then, the moving mechanism 1 may move the cable holder 10 in the second direction Y, so as to insert the row of fibers 110 into the row of bores 210 of the multi-bore ferrule 200.

Hereafter, it will describe in detail a method of inserting the row of fibers 110 of the multi-fiber cable 100 into the row of bores 210 of the multi-bore ferrule 200 by means of the above system with reference to Figs. 1-5. The method mainly comprising steps of:
S110: providing the system as stated in the above embodiments;
S120: holding the multi-fiber cable 100 and the multi-bore ferrule 200 on the cable holder 10 and the ferrule holder 20, respectively;
S130: identifying the center of the end surface profile of the row of fibers 110 and a center of an end surface profile of the multi-bore ferrule 200 by means of the vision device 30, 40;
S140: moving the cable holder 10 under the guidance of the vision device 30, 40 by means of the moving mechanism 1, so that the center of the end surface profile of the row of fibers 110 is aligned with the center of the end surface profile of the multi-bore ferrule 200; and
S150: moving the cable holder 10 by means of the moving mechanism 1, so that the row of fibers 110 are inserted into the row of bores 210 of the multi-bore ferrule 200.

The step S130 mainly comprising steps of:
S131: capturing a first image of the row of fibers 110 and the multi-bore ferrule 200 in the third direction Z by means of a first imaging apparatus 30;
S132: capturing a second image of the row of fibers 110 and the multi-bore ferrule 200 in the first direction X by means of a second imaging apparatus 40; and
S133: identifying a center line L101 of the row of fibers 110 and a center line L201 of the multi-bore ferrule 200 in the first image and identify a center line L102 of the row of fibers 110 and a center line L202 of the multi-bore ferrule 200 in the second image by means of an image recognition apparatus.

In an exemplary embodiment of the present invention, the step S140 mainly comprising steps of:
S141: moving the cable holder 10 in the first direction X by means of the moving mechanism 1 under the guidance of the vision device 30, 40, so that the center line L101 of the row of fibers 110 and the center line L201 of the multi-bore ferrule 200 in the first image are aligned with each other; and
S142: moving the cable holder 10 in the third direction Z by means of the moving mechanism 1 under the guidance of the vision device 30, 40, so that the center line L102 of the row of fibers 110 and the center line L202 of the multi-bore ferrule 200 in the second image are aligned with each other.

In an exemplary embodiment of the present invention, the step S150 mainly comprising steps of:
S151: moving the cable holder 10 in the second direction Y at a first speed by means of the moving mechanism 1 under the guidance of the vision device 30, 40, until an end surface of the at least one row of fibers 110 is near an end surface 203 of a platform 202 in the multi-bore ferrule 200;
S152: vertically moving the cable holder 10 upward by a predetermined distance in the third direction Z by means of the moving mechanism 1 under the guidance of the vision device 30, 40, so that a lower edge of the end surface profile of the row of fibers 110 is higher than an upper edge of the end surface 203 of the platform 202; and
S153: moving the cable holder 10 in the second direction Y at a second speed by means of the moving mechanism 1 under the guidance of the vision device 30, 40, until an end surface of an outer protection layer 120 of the multi-fiber cable 100 reaches the end surface 203 of the platform 202.

As shown in Figs.3 and 4, in an exemplary embodiment, the first imaging apparatus 30 is located above the cable holder 10 and the ferrule holder 20, and the platform 202 is exposed outside through an opening 205 formed in a top wall of the cable receiving chamber 201. In this way, the imaging apparatus 30 may capture an image of an end surface of the row of fibers 110 and an end surface 203 of the platform 202 at the same time, and a position of the end surface of the row of fibers 110 relative to the end surface 203 of the platform 202 may be obtained based on the image.

If the diameter of the fiber 110 is larger than a reference diameter due to a manufacturing error, the lower edge of the end surface profile of the row of fibers 110 may be lower than an upper edge of the end surface 203 of the platform 202 during inserting the fibers 110. Thereby, there may be a risk that the lower edge of the end surface profile of the row of fibers 110 contacts and collides with the upper edge of the end surface 203 of the platform 202, it may break the fibers 110. In order to avoid such risk, in the above step S152, after the end surface of the row of fibers 110 reaches a position near the end surface 203 of the platform 202 in the multi-bore ferrule 200, it needs to vertically move the cable holder 10 upward by the predetermined distance in the third direction Z by means of the moving mechanism 1, so as to prevent the lower edge of the end surface profile of the row of fibers 110 from contacting and colliding with the upper edge of the end surface 203 of the platform 202. The predetermined distance may be determined based on a maximum allowable tolerance of the diameter of the fiber 110, for example, the predetermined distance may be larger than half of the maximum allowable tolerance of the diameter of the fiber 110. In addition, the predetermined distance is not too large, so as to prevent an upper edge of the end surface profile of the row of fibers 110 from contacting and colliding with the upper edge of the row of bores 210. That is, the predetermined distance should be less than half of a difference value between a minimum diameter and a maximum diameter of the fiber110 in the allowable manufacturing error range, that is, the predetermined distance should be less than the maximum allowable tolerance of the diameter of the fiber 110.

In an exemplary embodiment of the present invention, in order to improve the fiber insertion efficiency, the first speed of the moving mechanism 1 in the step S151 should be larger than the second speed of the moving mechanism 1 in the step S153. In the step S151, the fibers 110 just enter into the cable receiving chamber 201 of the multi-bore ferrule 200 and will not be subjected to any resistance. Thereby, the fibers 110 may be moved at a higher speed in the cable receiving chamber 201, so as to increase the fiber insertion efficiency. In the step S153, the fibers 110 enter into the bores 210 and will be subjected to relatively higher resistance. Thereby, the fibers 110 should be moved at a lower speed in the bores 210, so as to prevent the fibers 110 from being broken due to too high insertion speed.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle, as long as they fall under the scope of the appended claims.

## Claims

1. A system for automatically inserting at least one row of fibers (110) of a multi-fiber cable (100) into at least one row of bores (210) of a multi-bore ferrule (200), the system comprising:
a vision device configured to identify a center of an end surface profile of the at least one row of fibers (110) and a center of an end surface profile of the multi-bore ferrule (200);
a cable holder (10) configured to hold the multi-fiber cable (100) thereon;
a ferrule holder (20) configured to hold the multi-bore ferrule (200) thereon; and
a moving mechanism (1) configured to be movable in a first direction (X), a second direction (Y) and a third direction (Z) that are perpendicular to each other,
wherein the cable holder (10) is mounted on the moving mechanism (1), and the moving mechanism (1) is adapted to move the cable holder (10) under the guidance of the vision device (30, 40), so as to align the center of the end surface profile of the at least one row of fibers (110) with the center of the end surface profile of the multi-bore ferrule (200) and insert the at least one row of fibers (110) into the at least one row of bores (210) of the multi-bore ferrule (200), the vision device comprising:
a first imaging apparatus (30) positioned so that an optical axis thereof is parallel to the third direction (Z), so as to capture a first image of the at least one row of fibers (110) and the multi-bore ferrule (200) in the third direction (Z);
an image recognition apparatus configured to identify a center line (L101) of the at least one row of fibers (110) and a center line (L201) of the multi-bore ferrule (200) in the first image;
**characterized in that**:
the vision device further comprises a second imaging apparatus (40) positioned so that an optical axis thereof is parallel to the first direction (X), so as to capture a second image of the at least one row of fibers (110) and the multi-bore ferrule (200) in the first direction (X);
the image recognition apparatus is further configured to identify a center line (L102) of the at least one row of fibers (110) and a center line (L102) of the multi-bore ferrule (200) in the second image.

2. The system according to claim 1,
wherein the third direction (Z) is a vertical direction, the first direction (X) and the second direction (Y) define a horizontal plane perpendicular to the third direction (Z).

3. The system according to claim 1,
wherein the cable holder (10) is configured to position the multi-fiber cable (100), so that a top surface and a bottom surface of the multi-fiber cable (100) are parallel to a plane defined by the first direction (X) and the second direction (Y); and
wherein the ferrule holder (20) is configured to position the multi-bore ferrule (200), so that a top surface and a bottom surface of the multi-bore ferrule (200) is parallel to the plane defined by the first direction (X) and the second direction (Y).

4. The system according to claim 1,
wherein the ferrule holder (20) and the vision device (30, 40) are stationary.

5. The system according to claim 1,
wherein the ferrule holder (20) comprises a stationary block (21) mounted on a working table (2) of the system; and
wherein a ferrule positioning slot (22), matched with the multi-bore ferrule (200), is formed in the stationary block (21) to receive the multi-bore ferrule (200) therein.

6. The system according to claim 1,
wherein the cable holder (10) comprises a stationary seat (11) and a movable pressing plate (12);
wherein a cable positioning slot (11a) is formed in the stationary seat (11) to receive the multi-fiber cable (100) therein; and
wherein the movable pressing plate 12 is adapted to press the multi-fiber cable (100), so as to hold the multi-fiber cable (100) in a place.

7. The system according to claim 1,
wherein the moving mechanism (1) is adapted to move the cable holder (10) in the first direction (X), so as to align the center line (L101) of the at least one row of fibers (110) with the center line (L102) of the multi-bore ferrule (200) in the first image;
wherein the moving mechanism (1) is adapted to move the cable holder (10) in the third direction (Z), so as to align the center line (L201) of the at least one row of fibers (110) with the center line (L202) of the multi-bore ferrule (200) in the second image; and
wherein the moving mechanism (1) is adapted to move the cable holder (10) in the second direction (Y), so as to insert the at least one row of fibers (110) into the at least one row of bores (210) of the multi-bore ferrule (200).

8. The system according to claim 7,
wherein the multi-bore ferrule (200) has a cable receiving chamber (201), a platform (202) is formed on and protruded from a bottom surface of the cable receiving chamber (201), a plurality of guiding recesses (204), for guiding the at least one row of fibers (110) into the at least one row of bores (210), are formed in a top surface of the platform (202), and an opening (205), through which the platform (202) is exposed outside, is formed in a top wall of the cable receiving chamber (201); and
wherein the first imaging apparatus (30) is located above the cable holder and the ferrule holder, so as to obtain a position of an end surface of the at least one row of fibers (110) relative to an end surface of the platform (202) based on an image of the end surface of the at least one row of fibers (110) and the end surface of the platform (202) captured by the first imaging apparatus (30) at the same time.

9. A method of automatically inserting at least one row of fibers (110) of a multi-fiber cable (100) into at least one row of bores (210) of a multi-bore ferrule (200), the method comprising steps of:
S110: providing the system according to claim 1;
S120: holding the multi-fiber cable (100) and the multi-bore ferrule (200) on the cable holder (10) and the ferrule holder (20), respectively;
S130: identifying the center of the end surface profile of the at least one row of fibers (110) and a center of an end surface profile of the multi-bore ferrule (200) by means of the vision device (30, 40) by
capturing a first image of the at least one row of fibers (110) and the multi-bore ferrule (200) in the third direction (Z) by means of a first imaging apparatus (30);
capturing a second image of the at least one row of fibers (110) and the multi-bore ferrule (200) in the first direction (X) by means of a second imaging apparatus (40); and
identifying a center line (L101) of the at least one row of fibers (110) and a center line (L102) of the multi-bore ferrule (200) in the first image and identifying a center line (L201) of the at least one row of fibers (110) and a center line (L202) of the multi-bore ferrule (200) in the second image by means of an image recognition apparatus;
S140: moving the cable holder (10) by means of the moving mechanism (1) under the guidance of the vision device (30, 40), so that the center of the end surface profile of the at least one row of fibers (110) is aligned with the center of the end surface profile of the multi-bore ferrule (200); and
S150: moving the cable holder (10) by means of the moving mechanism (1), so that the at least one row of fibers (110) are inserted into the at least one row of bores (210) of the multi-bore ferrule (200).

10. The method according to claim 9, wherein the step S140 comprises:
moving the cable holder (10) in the first direction (X) by means of the moving mechanism (1) under the guidance of the vision device (30, 40), so that the center line (L101) of the at least one row of fibers (110) and the center line (L102) of the multi-bore ferrule (200) in the first image are aligned with each other; and
moving the cable holder (10) in the third direction (Z) by means of the moving mechanism (1) under the guidance of the vision device (30, 40), so that the center line (L201) of the at least one row of fibers (110) and the center line (L202) of the multi-bore ferrule (200) in the second image are aligned with each other.

11. The method according to claim 10, wherein the step S150 comprises:
S151: moving the cable holder (10) in the second direction (Y) at a first speed by means of the moving mechanism (1) under the guidance of the vision device (30, 40), until an end surface of the at least one row of fibers (110) is near an end surface (203) of a platform (202) in the multi-bore ferrule (200);
S152: vertically moving the cable holder (10) upward by a predetermined distance in the third direction (Z) by means of the moving mechanism (1) under the guidance of the vision device (30, 40), so that a lower edge of the end surface profile of the at least one row of fibers (110) is higher than an upper edge of the end surface (203) of the platform (202); and
S153: moving the cable holder (10) in the second direction (Y) at a second speed by means of the moving mechanism (1) under the guidance of the vision device (30, 40), until an end surface of an outer protection layer (120) of the multi-fiber cable (100) reaches the end surface (203) of the platform (202).

12. The method according to claim 11, wherein the first speed is larger than the second speed.

13. The method according to claim 12,
wherein the predetermined distance is larger than half of a maximum allowable tolerance of a diameter of the fiber (110).

## Patentansprüche

1. System zum automatischen Einführen wenigstens einer Reihe von Fasern (110) eines Mehrfaserkabels (100) in wenigstens eine Reihe von Bohrungen (210) einer Ferrule (200) mit mehreren Bohrungen, wobei das System umfasst:
eine Sicht-Vorrichtung, die zum Identifizieren einer Mitte eines Endflächen-Profils der wenigstens einen Reihe von Fasern (110) und einer Mitte eines Endflächen-Profils der Ferrule (200) mit mehreren Bohrungen ausgeführt ist;
einen Kabel-Halter (10), der zum Halten des Mehrfaserkabels (100) daran ausgeführt ist;
einen Ferrulen-Halter (20), der zum Halten der Ferrule (200) mit mehreren Bohrungen daran ausgeführt ist; sowie
einen Bewegungsmechanismus (1), der so ausgeführt ist, dass er in einer ersten Richtung (X), einer zweiten Richtung (Y) und einer dritten Richtung (Z) bewegt werden kann, die senkrecht zueinander sind,
wobei der Kabel-Halter (10) an dem Bewegungsmechanismus (1) angebracht ist und der Bewegungsmechanismus (1) so eingerichtet ist, dass er den Kabel-Halter (10) unter der Führung der Sicht-Vorrichtung (30, 40) so bewegt, dass die Mitte des Endflächen-Profils der wenigstens einen Reihe von Fasern (110) auf die Mitte des Endflächen-Profils der Ferrule (200) mit mehreren Bohrungen ausgerichtet wird und die wenigstens eine Reihe von Fasern (110) in die wenigstens eine Reihe von Bohrungen (210) der Ferrule (200) mit mehreren Bohrungen eingeführt wird, wobei die Sicht-Vorrichtung umfasst:
eine erste Bilderzeugungs-Vorrichtung (30), die so positioniert ist, dass ihre optische Achse parallel zu der dritten Richtung (Z) ist, um ein erstes Bild der wenigstens einen Reihe von Fasern (110) und der Ferrule (200) mit mehreren Bohrungen in der dritten Richtung (Z) aufzunehmen;
eine Bilderkennungs-Vorrichtung, die zum Identifizieren einer Mittellinie (L101) der wenigstens einen Reihe von Fasern (110) und einer Mittellinie (L201) der Ferrule (200) mit mehreren Bohrungen in dem ersten Bild ausgeführt ist;
**dadurch gekennzeichnet, dass:**
die Sicht-Vorrichtung des Weiteren umfasst:
eine zweite Bilderzeugungs-Vorrichtung (40), die so positioniert ist, dass ihre optische Achse parallel zu der ersten Richtung (X) ist, um ein zweites Bild der wenigstens einen Reihe von Fasern (110) und der Ferrule (200) mit mehreren Bohrungen in der ersten Richtung (X) aufzunehmen;
wobei die Bilderkennungs-Vorrichtung des Weiteren zum Identifizieren einer Mittellinie (L102) der wenigstens einen Reihe von Fasern (110) und einer Mittellinie (L102) der Ferrule (200) mit mehreren Bohrungen in dem zweiten Bild ausgeführt ist.

2. System nach Anspruch 1,
wobei die dritte Richtung (Z) eine vertikale Richtung und die erste Richtung (X) sowie die zweite Richtung (Y) eine horizontale Ebene definieren, die senkrecht zu der dritten Richtung (Z) ist.

3. System nach Anspruch 1,
wobei der Kabel-Halter (10) so ausgeführt ist, dass er das Mehrfaserkabel (100) so positioniert, dass eine obere Fläche und eine untere Fläche des Mehrfaserkabels (100) parallel zu einer durch die erste Richtung (X) und die zweite Richtung (Y) definierten Ebene sind; und
der Ferrulen-Halter (20) so ausgeführt ist, dass er die Ferrule (200) mit mehreren Bohrungen so positioniert, dass eine obere Fläche und eine untere Fläche des Mehrfaserkabels (200) parallel zu der durch die erste Richtung (X) und die zweite Richtung (Y) definierten Ebene sind.

4. System nach Anspruch 1,
wobei der Ferrulen-Halter (20) und die Sicht-Vorrichtung (30, 40) stationär sind.

5. System nach Anspruch 1,
wobei der Ferrulen-Halter (20) einen stationären Block (21) umfasst, der auf einem Arbeitstisch (2) des Systems montiert ist; und
ein Schlitz (22) zum Positionieren einer Ferrule, der an die Ferrule (200) mit mehreren Bohrungen angepasst ist, in dem stationären Block (21) ausgebildet ist, um die Ferrule (200) mit mehreren Bohrungen darin aufzunehmen.

6. System nach Anspruch 1,
wobei der Kabel-Halter (10) einen stationären Sitz (11) und eine bewegliche Drückplatte (12) aufweist;
ein Schlitz (11a) zum Positionieren eines Kabels in dem stationären Sitz (11) ausgebildet ist, um das Mehrfaserkabel (100) darin aufzunehmen; und
die bewegliche Drückplatte (12) so eingerichtet ist, dass sie das Mehrfaserkabel (100) drückt, um das Mehrfaserkabel (100) stationär zu halten.

7. System nach Anspruch 1,
wobei der Bewegungsmechanismus (1) so eingerichtet ist, dass er den Kabel-Halter (10) in der ersten Richtung (X) bewegt, um die Mittellinie (L101) der wenigstens einen Reihe (110) von Fasern in dem ersten Bild auf die Mittellinie (L102) der Ferrule (200) mit mehreren Bohrungen auszurichten;
der Bewegungsmechanismus (1) so eingerichtet ist, dass er den Kabel-Halter (10) in der dritten Richtung (Z) bewegt, um die Mittellinie (L201) der wenigstens einen Reihe (110) von Fasern in dem zweiten Bild auf die Mittellinie (L202) der Ferrule (200) mit mehreren Bohrungen auszurichten; und
der Bewegungsmechanismus (1) so eingerichtet ist, dass er den Kabel-Halter (10) in der zweiten Richtung (Y) bewegt, um die wenigstens eine Reihe von Fasern (110) in die wenigstens eine Reihe von Bohrungen (210) der Ferrule (200) mit mehreren Bohrungen einzuführen.

8. System nach Anspruch 7,
wobei die Ferrule (200) mit mehreren Bohrungen eine Kabel-Aufnahmekammer (201) aufweist, eine Plattform (202) an einer Bodenfläche der Kabel-Aufnahmekammer (201) ausgebildet ist und von dieser vorsteht, eine Vielzahl von Führungs-Aussparungen (204) zum Führen der wenigstens einen Reihe von Fasern (110) in die wenigstens eine Reihe von Bohrungen (210) in einer oberen Fläche der Plattform (202) ausgebildet sind und eine Öffnung (205), durch die die Plattform (202) nach außen freiliegt, in einer oberen Wand der Kabel-Aufnahmekammer (201) ausgebildet ist; und
die erste Bilderzeugungs-Vorrichtung (30) oberhalb des Kabel-Halters und des Ferrulen-Halters angeordnet ist, um eine Position einer Endfläche der wenigstens einen Reihe von Fasern (110) relativ zu einer Endfläche der Plattform (202) auf Basis eines durch die erste Bilderzeugungs-Vorrichtung (30) zur gleichen Zeit aufgenommenen Bildes der Endfläche der wenigstens einen Reihe von Fasern (110) und der Endfläche der Plattform (202) zu bestimmen.

9. Verfahren zum automatischen Einführen wenigstens einer Reihe von Fasern (110) eines Mehrfaserkabels (100) in wenigstens eine Reihe von Bohrungen (210) einer Ferrule (200) mit mehreren Bohrungen, wobei das Verfahren die folgenden Schritte umfasst:
S110: Bereitstellen des Systems nach Anspruch 1;
S120: Halten des Mehrfaserkabels (100) und der Ferrule (200) mit mehreren Bohrungen an dem Kabel-Halter (10) bzw. dem Ferrulen-Halter (20);
S130: Identifizieren der Mitte des Endflächen-Profils der wenigstens einen Reihe von Fasern (110) und einer Mitte eines Endflächen-Profils der Ferrule (200) mit mehreren Bohrungen mittels der Sicht-Vorrichtung (30, 40) durch
Aufnehmen eines ersten Bildes der wenigstens einen Reihe von Fasern (110) und der Ferrule (200) mit mehreren Bohrungen in der dritten Richtung (Z) mittels einer ersten Bilderzeugungs-Vorrichtung (30);
Aufnehmen eines zweiten Bildes der wenigstens einen Reihe von Fasern (110) und der Ferrule (200) mit mehreren Bohrungen in der ersten Richtung (X) mittels einer zweiten Bilderzeugungs-Vorrichtung (40); sowie
Identifizieren einer Mittellinie (L101) der wenigstens einen Reihe von Fasern (110) und einer Mittellinie (L102) der Ferrule (200) mit mehreren Bohrungen in dem ersten Bild sowie Identifizieren einer Mittellinie (L201) der wenigstens einen Reihe von Fasern (110) und einer Mittellinie (L202) der Ferrule (200) mit mehreren Bohrungen in dem zweiten Bild mittels einer Bilderkennungs-Vorrichtung;
S140: Bewegen des Kabel-Halters (10) mittels des Bewegungsmechanismus (1) unter der Führung der Sicht-Vorrichtung (30, 40), so dass die Mitte des Endflächen-Profils der wenigstens einen Reihe von Fasern (110) auf die Mitte des Endflächen-Profils der Ferrule (200) mit mehreren Bohrungen ausgerichtet wird; und
S150: Bewegen des Kabel-Halters (10) mittels des Bewegungsmechanismus (1), so dass die wenigstens eine Reihe von Fasern (110) in die wenigstens eine Reihe von Bohrungen (210) der Ferrule (200) mit mehreren Bohrungen eingeführt wird.

10. Verfahren nach Anspruch 9, wobei der Schritt S140 umfasst:
Bewegen des Kabel-Halters (10) in der ersten Richtung (X) mittels des Bewegungsmechanismus (1) unter der Führung der Sicht-Vorrichtung (30, 40), so dass die Mittellinie (L101) der wenigstens einen Reihe von Fasern (110) und die Mittellinie (L102) der Ferrule (200) mit mehreren Bohrungen in dem ersten Bild aufeinander ausgerichtet werden; und
Bewegen des Kabel-Halters (10) in der dritten Richtung (X) mittels des Bewegungsmechanismus (1) unter der Führung der Sicht-Vorrichtung (30, 40), so dass die Mittellinie (L201) der wenigstens einen Reihe von Fasern (110) und die Mittellinie (L202) der Ferrule (200) mit mehreren Bohrungen in dem zweiten Bild aufeinander ausgerichtet werden.

11. Verfahren nach Anspruch 10, wobei der Schritt S150 umfasst:
S151: Bewegen des Kabel-Halters (10) in der zweiten Richtung (Y) mit einer ersten Geschwindigkeit mittels des Bewegungsmechanismus (1) unter der Führung der Sicht-Vorrichtung (30, 40), bis sich eine Endfläche der wenigstens einen Reihe von Fasern (110) in der Nähe einer Endfläche (203) einer Plattform (202) in der Ferrule (200) mit mehreren Bohrungen befindet;
S152: vertikales Bewegen des Kabel-Halters (10) nach oben um eine vorgegebene Strecke in der dritten Richtung (Z) mittels des Bewegungsmechanismus (1) unter der Führung der Sicht-Vorrichtung (30, 40), so dass eine untere Kante des Endflächen-Profils der wenigstens einen Reihe von Fasern (110) höher liegt als eine obere Kante der Endfläche (203) der Plattform (202); und
S153: Bewegen des Kabel-Halters (10) in der zweiten Richtung (Y) mit einer zweiten Geschwindigkeit mittels des Bewegungsmechanismus (1) unter der Führung der Sicht-Vorrichtung (30, 40), bis eine Endfläche einer äußeren Schutzschicht (120) des Mehrfaserkabels (100) die Endfläche (203) der Plattform (202) erreicht.

12. Verfahren nach Anspruch 11, wobei die erste Geschwindigkeit höher ist als die zweite Geschwindigkeit.

13. Verfahren nach Anspruch 12,
wobei die vorgegebene Strecke größer ist als die Hälfte einer maximal zulässigen Toleranz eines Durchmessers der Faser (110).

## Revendications

1. Système permettant d'insérer automatiquement au moins une rangée de fibres (110) d'un câble multi fibres (100) dans au moins une rangée de trous (210) d'une virole multi trous (200), le système comprenant :
un dispositif de vision configuré pour identifier le centre d'un profil de surface d'extrémité de la virole multi trous (200),
un support de câble (10) configuré pour retenir sur lui le câble multi fibres (100),
un support de virole (20) configuré pour retenir sur lui la virole multi trous (200), et
un mécanisme mobile (1) configuré pour être mobile dans une première direction (X), une deuxième direction (Y) et une troisième direction (Z) perpendiculaires les unes par rapport aux autres,
dans lequel le support de câble (10) est monté sur le mécanisme mobile (1), et le mécanisme mobile (1) est conçu pour déplacer le support de câble (10) sous la direction du dispositif de vision (30, 40) de sorte à aligner le centre du profil de surface d'extrémité de la ou des rangées de fibres (110) avec le centre du profil de surface d'extrémité de la virole multi trous (200) et à insérer la ou les rangées de fibres (110) dans la ou les rangées de trous (210) de la virole multi trous (200),
le dispositif de vision comprenant :
un premier appareil d'imagerie (30) positionné de telle sorte que son axe optique soit parallèle à la troisième direction (Z) de façon à prendre une première image de la ou des rangées de fibres (110) et de la virole multi trous (200) dans la troisième direction (Z),
un appareil de reconnaissance d'image configuré pour identifier la ligne centrale (L101) de la ou des rangées de fibres (110) et la ligne centrale (L201) de la virole multi trous (200) dans la première image,
**caractérisé en ce que** :
le dispositif de vision comprend en outre un second appareil d'imagerie (40) positionné de telle sorte que son axe optique soit parallèle à la première direction (X) de façon à prendre une seconde image de la ou des rangées de fibres (110) et de la virole multi trous (200) dans la première direction (X),
l'appareil de reconnaissance d'image étant en outre configuré pour identifier la ligne centrale (L102) de la ou des rangées de fibres (110) et la ligne centrale (L202) de la virole multi trous (200) dans la seconde image.

2. Système selon la revendication 1,
dans lequel la troisième direction (Z) est la direction verticale, la première direction (X) et la deuxième direction (Y) définissant un plan horizontal perpendiculaire à la troisième direction (Z).

3. Système selon la revendication 1,
dans lequel le support de câble (10) est configuré pour positionner le câble multi fibres (100) de sorte à ce que la surface supérieure et la surface inférieure du câble multi fibres (100) soient parallèles au plan défini par la première direction (X) et la deuxième direction (Y).

4. Système selon la revendication 1,
dans lequel le support de virole (20) et le dispositif de vision (30, 40) sont fixes.

5. Système selon la revendication 1,
dans lequel le support de virole (20) comprend un bloc fixe (21) monté sur une table de travail (2) du système, et
dans lequel une fente de positionnement de virole (22), appariée avec la virole multi trous (200), est formée dans le bloc fixe (21) pour recevoir en elle la virole multi trous (200) .

6. Système selon la revendication 1,
dans lequel le support de câble (10) comprend un siège fixe (11) et une plaque mobile de pressage (12),
dans lequel une fente de positionnement de câble (11a) est formée dans le siège fixe (11) pour recevoir en elle le câble multi fibres (100), et
dans lequel la plaque mobile de pressage (12) est conçue pour presser le câble multi fibres (100) de sorte à maintenir le câble multi fibres (100) dans un emplacement.

7. Système selon la revendication 1,
dans lequel le mécanisme mobile (1) est conçu pour déplacer le support de câble (10) dans la première direction (X) de sorte à aligner la ligne centrale (L101) de la ou des rangées de fibres (110) avec la ligne centrale (L102) de la virole multi trous (200) dans la première image,
dans lequel le mécanisme mobile (1) est conçu pour déplacer le support de câble (10) dans la troisième direction (Z) de sorte à aligner la ligne centrale (L201) de la ou des rangées de fibres (110) avec la ligne centrale (L202) de la virole multi trous (200) dans la seconde image, et
dans lequel le mécanisme mobile (1) est conçu pour déplacer le support de câble (10) dans la deuxième direction (Y) de sorte à insérer la ou les rangées de fibres (110) dans la ou les rangées de trous (210) de la virole multi trous (200).

8. Système selon la revendication 7,
dans lequel la virole multi trous (200) possède un compartiment de réception de câble (201), une plate-forme est formée sur une surface inférieure du compartiment de réception de câble (201) et fait saillie hors de celui-ci, une pluralité d'évidements de guidage (204), destinés à guider la ou les rangées de fibres (110) dans la ou les rangées de trous (210), sont formés dans la surface supérieure de la plate-forme (202), et une ouverture (205), au travers de laquelle la plate-forme (202) est exposée vers l'extérieur, est formée dans la paroi supérieure du compartiment de réception de câble (201), et
dans lequel le premier appareil d'imagerie (30) est situé au-dessus du support de câble et du support de virole de sorte à obtenir une position de la surface d'extrémité de la ou des rangées de fibres (110) par rapport à la surface d'extrémité de la plate-forme (202) sur la base d'une image de la surface d'extrémité de la ou des rangées de fibres (110) et de la surface d'extrémité de la plate-forme (202) prise en même temps par le premier appareil d'imagerie (30).

9. Procédé d'insertion automatique d'une rangée de fibres (110) d'un câble multi fibres (100) dans au moins une rangée de trous (210) d'une virole multi trous (200), le procédé comprenant les étapes suivantes :
S110 : l'utilisation du système conforme à la revendication 1,
S120 : le maintien respectif du câble multi fibres (100) et de la virole multi trous (200) sur le support de câble (10) et le support de virole (20),
S130 : l'identification du centre du profil de surface d'extrémité de la ou des rangées de fibres (110) et du centre du profil de surface d'extrémité de la virole multi trous (200) au moyen du dispositif de vision (30, 40), grâce à :
la prise d'une première image de la ou des rangées de fibres (110) et de la virole multi trous (200) dans la troisième direction (Z) au moyen d'un premier appareil d'imagerie (30),
la prise d'une seconde image de la ou des rangées de fibres (110) et de la virole multi trous (200) dans la première direction (X) au moyen de second appareil d'imagerie (40), et
l'identification de la ligne centrale (L101) de la ou des rangées de fibres (110) et de la ligne centrale (L102) de la virole multi trous (200) dans la première image, et l'identification de la ligne centrale (L201) de la ou des rangées de fibres (110) et de la ligne centrale (L202) de la virole multi trous (200) dans la seconde image au moyen d'un appareil de reconnaissance d'image,
S140 : le déplacement du support de câble (10) au moyen du mécanisme mobile (1) sous la direction du dispositif de vision (30, 40) de sorte à ce que le centre du profil de surface d'extrémité de la ou des rangées de fibres (110) soit aligné avec le centre du profil de surface d'extrémité de la virole multi trous (200), et
S150 : le déplacement du support de câble (10) au moyen du mécanisme mobile (1) de sorte à ce que la ou les rangées de fibres (110) soient insérées dans la ou les rangées de trous (210) de la virole multi trous (200).

10. Procédé selon la revendication 9, dans lequel l'étape S140 comprend :
le déplacement du support de câble (10) dans la première direction (X) au moyen du mécanisme mobile (1) sous la direction du dispositif de vision (30, 40) de sorte à ce que la ligne centrale (L101) de la ou des rangées de fibres (110) et la ligne centrale (L102) de la virole multi trous (200) dans la première image soient alignées l'une avec l'autre, et
le déplacement du support de câble (10) dans la troisième direction (Z) au moyen du mécanisme mobile (1) sous la direction du dispositif de vision (30, 40) de sorte à ce que la ligne centrale (L201) de la ou des rangées de fibres (110) et la ligne centrale (L202) de la virole multi trous (200) dans la seconde image soient alignées l'une avec l'autre.

11. Procédé selon la revendication 10, dans lequel l'étape S150 comprend :
S151 : le déplacement du support de câble (10) dans la deuxième direction (Y) à une première vitesse au moyen du mécanisme mobile (1) sous la direction du dispositif de vision (30, 40) jusqu'à ce que la surface d'extrémité de la ou des rangées de fibres (110) soit proche de la surface d'extrémité (203) d'une plate-forme (202) dans la virole multi trous (200),
S152 : le déplacement vertical du support de câble (10) vers le haut sur une distance prédéterminée dans la troisième direction (Z) au moyen du mécanisme mobile (1) sous la direction du dispositif de vision (30, 40) de sorte à ce que le bord inférieur du profil de surface d'extrémité de la ou des rangées de fibres (110) soit plus ou que le bord supérieur de la surface d'extrémité (203) de la plate-forme (202), et
S153 : le déplacement du support de câble (10) dans la deuxième direction (Y) à une seconde vitesse au moyen du mécanisme mobile (1) sous la direction du dispositif de vision (30, 40) jusqu'à ce que la surface d'extrémité d'une couche de protection externe (120) du câble multi fibres (100) atteigne la surface d'extrémité (203) de la plate-forme (202).

12. Procédé selon la revendication 11, dans lequel la première vitesse est plus grande que la seconde vitesse.

13. Procédé selon la revendication 12,
dans lequel la distance prédéterminée est plus grande que la moitié de la tolérance maximale admissible du diamètre de la fibre (110).
